# EUROPÄISCHE PATENTANMELDUNG

(11) **EP 2 399 716 A2**
(43) Veröffentlichungstag der Anmeldung: **28.12.2011**
(21) Anmeldenummer: 11171499.4
(22) Anmeldetag: 27.06.2011
(51) Int. Cl.: B29B 9/06

(54) **Lochplatte für einen Unterwassergranulator**

(30) Priorität: 28.06.2010 DE 102010030614
(71) Anmelder: Reduction Engineering GmbH, 70435 Stuttgart (DE)
(72) Erfinder: Kreuz, Ulrich, 71729 Erdmannhausen (DE); Zollitsch, Ludwig, 70825 Korntal (DE)
(74) Vertreter: Klunker . Schmitt-Nilson . Hirsch

(57) **Zusammenfassung**

Die Erfindung betrifft eine Lochplatte (1, 1 a) für einen Granulierkopf (10) eines Unterwassergranulators zum Granulieren von Kunststoffen. Die Lochplatte (1, 1a) weist Durchgangsöffnungen (3) zum Durchtritt von Kunststoffschmelze und in die Durchgangsöffnungen (3) eingesetzte Düsen (2) auf. An den austrittsseitigen Enden der Durchgangsöffnungen (3) ist jeweils eine Schulter (5) vorgesehen, welche in die jeweilige Durchgangsöffnung (3) hineinragt. Die Düsen (2) verjüngen sich an ihrem austrittsseitigen Ende im Außenquerschnitt und liegen mit ihren so gebildeten Stirnflächen (4) an den Schultern (5) der Durchgangsöffnungen (3) an. Die Stirnflächen (4) der Düsen (2) können insbesondere im Wesentlichen sphärisch ausgebildet sein, so dass die Kontaktfläche (7) und damit ein Wärmefluss zwischen den Düsen (2) und der Lochplatte (1, 1 a) minimal ist.

## Beschreibung

Die Erfindung betrifft eine Lochplatte für einen Granulierkopf eines Unterwassergranulators, Düsen für einen Granulierkopf eines Unterwassergranulators, die zur Verwendung mit einer solchen Lochplatte besonders angepasst sind, und einen Unterwassergranulator mit einer solchen Lochplatte und/oder solchen Düsen.

Unterwassergranulatoren dienen zur Herstellung von Kunststoffgranulat. Dazu wird der Kunststoff durch die Lochplatte eines Granulierkopfs hindurch in eine Wasserkammer gepresst. Mittels eines rotierenden Messerkopfes werden die aus den Durchgangsöffnungen der Lochplatte austretenden Kunststoffstränge durchtrennt, wobei das so entstehende Kunststoffgranulat mit dem die Wasserkammer durchströmenden Kühlwasser abgeführt wird.

Die Temperatur der Kunststoffschmelze am Austrittsende der Durchgangsöffnungen ist von besonderer Bedeutung, da die Kunststoffschmelze erst nach dem Austreten erstarren darf. Ein Erstarren der Schmelze bereits in den Durchgangsöffnungen verursacht einen ungleichmäßigen Schmelzefluss oder sogar die Unterbrechung des Schmelzeflusses. Aufgrund solcher Störungen muss gegebenenfalls die gesamte Granulieranlage abgeschaltet werden. Insbesondere beim Anfahren der Granulieranlage ist dieses auch als "Einfrieren" bezeichnete Phänomen unbedingt zu vermeiden.

Beim Anfahren eines Unterwassergranulators ist auf das gleichzeitige Einströmen des Kühlwassers in die Wasserkammer und das Austreten der Kunststoffschmelze zu achten. Würde die Lochplatte bereits zu früh von Kühlwasser umströmt werden, hätte dies ein starkes Abkühlen der Düsen zur Folge, wodurch in die Düsen eintretende Schmelze sofort erstarren würde. Würde andererseits die Kunststoffschmelze aus den Düsen austreten, ohne dass sofort eine Kühlung erfolgt, würde die Lochplatte und der Messerkopf mit Kunststoffschmelze verschmieren. Daher wird üblicherweise eine Bypass-Leitung für das Kühlwasser vorgesehen, so dass das bereits durch die Bypass-Leitung fließende Kühlwasser beim Anfahren lediglich in die Wasserkammer umgeleitet werden muss und so zum richtigen Zeitpunkt zur Verfügung steht. Aufgrund derselben Problematik ist eine Unterbrechung des Schmelzestroms während des Betriebes üblicherweise nicht möglich, ohne das Kühlwasser abzulassen, da die Kunststoffschmelze in den Düsen ebenfalls sofort erstarren würden.

Ein Verstopfen einzelner Düsen während des Betriebs hat den Nachteil, dass sich die Granulatlänge ändert, ungleichförmiges Granulat entstehen kann und sich die Druckverhältnisse im Granulierkopf ändern. Der Druck steigt durch die erhöhte Durchflussgeschwindigkeit, sowie die ansteigende Viskosität nichtnewtonscher Flüssigkeiten bei größerem Schergefälle.

Wird der Anpressdruck durch einen Extruder erzeugt, vergrößert sich bei steigendem Kopfdruck die Rückstaulänge der Schmelze und das Produkt kann thermisch geschädigt werden.

Das Verstopfen einzelner Düsen wirkt sich somit negativ auf die Kunststoffschmelze und den Granulierprozess aus.

Im Stand der Technik sind unterschiedliche Lösungen beschrieben, die Kunststoffschmelze in den Durchgangsöffnungen bzw. Düsen so zu führen, dass deren Oberfläche praktisch bis zum Austritt Schmelzetemperatur aufweist. Die Lochplatten sind dazu in der Regel beheizt, wobei allerdings ein starkes Wärmegefälle an der mit dem Kühlwasser in Kontakt stehenden Austrittsseite der Lochplatte auftritt.

Um einen Wärmefluss von den Düsen auf die mit Wasser in Kontakt stehende Lochplatte, d.h. ein Abkühlen der Düsen durch das angrenzende Kühlwasser zu vermeiden, schlägt die AT 505 845 B1 vor, die Düsen berührungsfrei in den Durchgangsöffnungen der Lochplatte zu lagern, wobei der direkte Kontakt der Düsen mit der Lochplatte durch ein elastisches Dichtungsmaterial vermieden wird. Das Dichtungsmaterial liegt auf einer Stirnfläche der Düsen auf und stützt sich gegen eine Schulter am austrittsseitigen Ende der Durchgangsöffnungen ab, welche in die Durchgangsöffnungen hineinragt. Die Düsen weisen außerdem jeweils an ihrer Innenseite einen über die Stirnfläche hinausragenden Steg auf, um den Kontakt der durch die Düsen strömenden heißen Kunststoffschmelze mit dem Dichtungsmaterial zu vermeiden. Ferner verjüngen sich die Düsen in Richtung ihres Austrittsendes, so dass sie keinen seitlichen Kontakt mit den Innenseiten der Durchgangsöffnungen haben.

Auf diese Weise kann der Wärmefluss von den Düsen auf die Lochplatte derart reduziert werden, dass oben genannte Probleme weitgehend eliminiert werden. Insbesondere ist bei einer solchen Konstruktionsweise eine Bypass-Leitung für das Kühlwasser nicht mehr unbedingt notwendig, da dieses bereits kurz vor dem Austritt der Kunststoffschmelze in die Wasserkammer eingelassen werden kann, ohne dass die Düsen zu stark abkühlen. Dadurch ist es auch möglich, während des Betriebs den Schmelzestrom kurzzeitig zu unterbrechen und ohne Einfrieren der Düsen wieder anzufahren.

Allerdings sind die dafür notwendigen elastischen Hochtemperaturdichtungen relativ teuer und in ihrer thermischen Belastbarkeit begrenzt.

Lochplatten müssen häufig gereinigt werden, was üblicherweise thermisch erfolgt (z.B. Pyrolyseofen).

Da die elastischen Dichtungen den Reinigungstemperaturen nicht standhalten, muss die Lochplatte von Fachkräften demontiert, gereinigt und nach der Reinigung mit neuen Dichtungen versehen werden. Die Wartung der Anlage wird dadurch erheblich erschwert.

Aufgabe der vorliegenden Erfindung ist es daher, eine Lochplatte und Düsen für einen Unterwassergranulator bereitzustellen, welche einen Wärmefluss zwischen Lochplatte und Düsen minimieren und dabei eine zuverlässige Dichtwirkung aufweisen, die jedoch einfacher zu warten und kostengünstiger sind, als die bekannten Vorrichtungen.

Diese Aufgabe wird durch eine Lochplatte und Düsen für einen Granulierkopf eines Unterwassergranulators gemäß den unabhängigen Ansprüchen gelöst. Weiterbildungen und vorteilhafte Ausgestaltungen sind in davon abhängigen Ansprüchen angegeben.

Erfindungsgemäß ist vorgesehen, dass die Düsen mit ihrer jeweiligen Stirnfläche, welche durch die Verjüngung des Außenquerschnitts der Düsen an ihrem austrittsseitigen Ende gebildet wird, an den Schultern der Durchgangsöffnungen anliegen. Auf diese Weise wird kein separates Dichtungsmaterial benötigt, da die Dichtung durch den direkten Kontakt der Düsen mit den Schultern der Durchgangsöffnungen erfolgt. Im einfachsten Fall liegt somit ein metallischer Kontakt zwischen den Düsen und den Schultern der Durchgangsöffnungen vor. Da sich die Düsen im Außenquerschnitt an ihrem Austrittsende verjüngen und lediglich mit ihren Stirnflächen mit der Lochplatte in Kontakt stehen, ist die Kontaktfläche klein, so dass auch der Wärmefluss zwischen den Düsen und der mit dem Kühlwasser in Kontakt stehenden Lochplatte klein ist. Die eingangs beschriebenen Nachteile, insbesondere das Einfrieren der Düsen, werden dadurch vermieden. Ferner wird die Wartung vereinfacht, da kein separates Dichtungsmaterial gehandhabt und gegebenenfalls ersetzt werden muss. Durch das Entfallen eines Dichtungsmaterials können die Kosten reduziert werden.

Vorteilhaft sind die austrittsseitigen Stirnflächen der Düsen schräg, so dass die Kontaktfläche mit den Schultern der Durchgangsöffnungen minimiert wird. Schräg bedeutet, dass die Stirnflächen der Düsen nicht parallel zur Austrittsseite der Lochplatte sind, über welcher der Messerkopf rotiert. Im Idealfall berühren sich die Düsen und die Schultern lediglich auf einer Kreislinie. Aufgrund der sehr kleinen Kontaktfläche wird der Wärmefluss von der Lochplatte auf die Düsen minimiert, so dass ein Erstarren der Kunststoffschmelze in den Düsen verhindert werden kann. Ferner wird durch die schrägen austrittsseitigen Stirnflächen die Dichtwirkung zwischen den Düsen und den Schultern verbessert. Denn aufgrund der minimalen Kontaktfläche ist die Kraft, mit der die Düsen gegen die Schultern gepresst werden, pro Kontaktflächenbereich sehr hoch.

Vorzugsweise sind die Stirnflächen der Düsen konvex, besonders bevorzugt im Wesentlichen sphärisch ausgebildet, d.h. die Stirnflächen sind nicht linear abgeschrägt, sondern folgen im Querschnitt betrachtet im Wesentlichen einem Bogen. Beispielsweise entspricht die Stirnfläche der Düse im Wesentlichen einer Halbkugelfläche. Die Stirnfläche kann aber auch einer Oberfläche eines beliebigen Kugelsegments entsprechen, wobei die Oberfläche immer notwendigerweise durch die Austrittsöffnung der Düse unterbrochen ist. Durch Vorsehen einer im Wesentlichen sphärischen Stirnfläche kann die Dichtwirkung weiter verbessert werden, da die Neigung der Stirnflächen der Düsen im Bereich um ihre jeweilige Austrittsöffnung relativ flach ist und somit ein Kontakt mit der Schulter in einem sehr flachen Winkel möglich ist. Die konvexe und insbesondere eine im wesentlichen sphärische Stirnflächenausbildung erhöht gleichzeitig die Stabilität der Düsenspitze im Vergleich zu einer linear schrägen Stirnfläche.

Der axial vorderste Bereich der Stirnflächen kann jedoch eben ausgebildet sein. Beispielsweise kann es von Vorteil sein, die Düsen an ihrem austrittsseitigen Ende abzuflachen, um sie alle auf eine einheitliche Länge zu bringen. Sofern dieser Bereich entsprechend klein gehalten ist, bleibt die linienförmige Berührung im Wesentlichen erhalten. Wenn gleichzeitig die Schulter zumindest im Kontaktbereich mit den Düsen eben ausgebildet ist, also parallel zum ebenen vordersten Stirnflächenbereich der Düse, ist vorteilhafterweise eine Relativbewegung in radialer Richtung möglich, die z.B. Verformungen aufgrund von Temperaturänderungen ausgleichen kann.

Bevorzugt weisen aber nicht nur die Stirnflächen der Düsen eine konvexe, vorzugsweise im Wesentlichen sphärische Form auf, sondern auch die Flächen der Schultern der Durchgangsöffnungen weisen eine konkave, vorzugsweise im Wesentlichen sphärische Form auf. Auf diese Weise besteht im Idealfall eine Linienberührung entlang einer Kreislinie, wobei die konvexen Stirnflächen der Düsen und die konkaven Flächen der Schultern der Durchgangsöffnungen in einem relativ flachen Winkel aufeinander treffen. Auch dadurch können unter Erhaltung der Dichtwirkung jedenfalls kleine radiale Verschiebungen der Düsen gegenüber der Lochplatte aufgenommen werden, welche beispielsweise durch thermische Bewegungen auftreten können.

Durch eine Ausbildung der Schultern mit einer konkaven Form wird die Stabilität der Schultern deutlich erhöht, so dass die Dicke der Schultern am Durchtrittsquerschnitt entsprechend klein ausgeführt werden kann. Insbesondere weisen die Stirnflächen der Düsen und die Schultern unterschiedliche Krümmungsradien auf, wobei der Radius der Stirnflächen der Düsen selbstverständlich kleiner ist als der Krümmungsradius der Schultern.

Die Düsen sind in der Düsenplatte vorzugsweise derart gelagert, dass sie bezüglich der Lochplatte axial justierbar sind. Insbesondere können die Düsen mittels eines Gewindes in die Lochplatte eingeschraubt sein. Dadurch kann jede Düse einzeln gegen die Schultern der Durchgangsöffnungen gedrückt werden, so dass für jede Düse in jeder Durchgangsöffnung die Dichtwirkung gewährleistet ist. Axiale Toleranzen in den Abmessungen der Düsen und der Lochplatte können so auf einfache Weise ausgeglichen werden, so dass ein Abflachen der Düsen am Austrittsende zum Toleranzausgleich entfallen kann. Es lässt sich so eine ideale Linienpressung axial zwischen den Düsen und der Lochplatte erreichen. Die Austauschfähigkeit sämtlicher Teile ist gewährleistet.

In einer bevorzugten Ausführungsform wird die Lochplatte durch eine Düsenplatte zur Aufnahme der Düsen und eine austrittsseitig vor die Düsenplatte montierte Schneidplatte gebildet, wobei die Schultern in der Schneidplatte ausgebildet sind. Die Schneidplatte dient zum Schutz des Granulierkopfes vor starkem Verschleiß durch den rotierenden Messerkopf und kann relativ dünn ausgebildet sein. Die Oberfläche der Schneidplatte, auf welcher der Messerkopf rotiert, kann zudem noch mit einer Verschleißschutzschicht versehen sein. Insbesondere kann zwischen der Schneidplatte und der Düsenplatte ein Zwischenraum vorhanden sein, der dazu dient, den Granulierkopf gegenüber einer Wärmeableitung über die Lochplatte ins Kühlwasser des Unterwassergranulators zu isolieren.

Es ist darüber hinaus vorteilhaft, zumindest die Schultern der Durchgangsöffnungen der Lochplatte bzw. Schneidplatte mit einer Beschichtung zu versehen, welche aus einem weicheren Material besteht als die Lochplatte/Schneidplatte selbst. Es ist ausreichend, nur die Schultern zu beschichten, es kann aber z.B. aus produktionstechnischen Gründen auch vorgesehen sein, die komplette Lochplatte/Schneidplatte von einer Seite mit einer solchen Beschichtung zu versehen. Durch das weichere Material im Bereich der Kontaktfläche mit den Düsen kann die axiale Dichtung weiter verbessert werden. Eine solche Beschichtung kann auch radiale thermische Bewegungen aufnehmen. Als Materialien kommen beispielsweise ein weicheres Metall als das der Lochplatte/Schneidplatte oder auch Kunststoff in Betracht.

Während des Betriebs kann sich die Schneidplatte nach außen, d.h. in Richtung der Wasserkammer, wölben. Dies kann geschehen, wenn sich die Düsen aufgrund ihrer Erwärmung axial stärker ausdehnen als die Düsenplatte und/oder die Befestigungsschrauben zwischen Schneidplatte und Düsenplatte. Da die Düsen über die Schultern der Durchgangsöffnungen in Kontakt mit der Schneidplatte stehen, drücken sie entsprechend gegen die Schneidplatte. Auf der außen liegenden Seite der Schneidplatte rotiert jedoch der Messerkopf, um das Kunststoffgranulat zu erzeugen. Durch den durch die Wölbung verstärkten Druck des Messerkopfes erhöht sich der Verschleiß.

Um ein Wölben der Schneidplatte gegen den rotierenden Messerkopf zu reduzieren oder zu vermeiden, kann es vorteilhaft sein, die Schneidplatte zentral in Richtung der Düsenplatte zu verspannen. Auf diese Weise wird eine Wölbung der üblicherweise nur am Rand fixierten Schneidplatte in Richtung des Messerkopfes vermieden. Die dadurch entstehende Wärmebrücke ist vernachlässigbar, da sich die Düsen üblicherweise in einer Kreisanordnung in ausreichendem Abstand zum Zentrum der Lochplatte bzw. Schneidplatte befinden. Die zentrale Fixierung der Schneidplatte wirkt sich somit nicht negativ auf den Schmelzefluss in den Düsen aus.

Alternativ oder zusätzlich ist es möglich, die Eintrittsseite der Schneidplatte konvex auszubilden. Eine eventuell auftretende Wölbung aufgrund der sich axial ausdehnenden Düsen wird durch die Konvexität aufgrund der erhöhten Materialstärke kompensiert.

Um eine axiale Ausdehnung der Düsen aufzunehmen, kann es auch vorgesehen sein, die Düsen axial federnd gegen die Schultern zu lagern. Die Schneidplatte kann gegen Federn, beispielsweise Tellerfedern, mit der Düsenplatte verschraubt werden. Dabei liegen die Federn vorzugsweise jeweils unter dem Schraubenkopf. Um eine gute Kompensation der axialen thermischen Ausdehnung der Düsen zu erreichen, können die Federn durch das Einschrauben der Düsen vorgespannt werden. Die Federkonstante wird vorzugsweise niedrig gewählt, so dass ein sich ändernder Federweg bei einer thermisch bedingten Längenänderung der Düsen sich nicht nennenswert auf die Federkraft auswirkt. Da die Federkraftänderung somit klein ist, wird ein Wölben der Schneidplatte gegen den Messerkopf während des Betriebs vermieden, so dass der Verschleiß der Messer reduziert wird.

Die beschriebene Lochplatte und die Düsen sind insbesondere für die Verwendung in einem Unterwassergranulator eingerichtet. Es wird eine hohe Dichtigkeit zwischen den Düsen und der Lochplatte bei gleichzeitig niedrigem Wärmefluss erreicht. Insbesondere wird dadurch das eingangs beschriebene Problem des Einfrierens der Düsen vermieden.

Die Erfindung wird im Folgenden beispielhaft anhand der begleitenden Zeichnungen beschrieben. Darin zeigen:
Figur 1 einen Granulierkopf eines Unterwassergranulators in Draufsicht,
Figur 2 den Granulierkopf aus Figur 1 im Schnitt,
Figuren 3a und 3b Detailansichten zweier Ausführungsbeispiele eines Kontaktbereichs zwischen einer Düse und einer Schulter in einer Durchgangsöffnung im Schnitt,
Figur 4 eine Düse mit Gewinde im Schnitt, und
Figur 5 eine Düse wie in Figur 4 mit einem Wärmeleitstift.

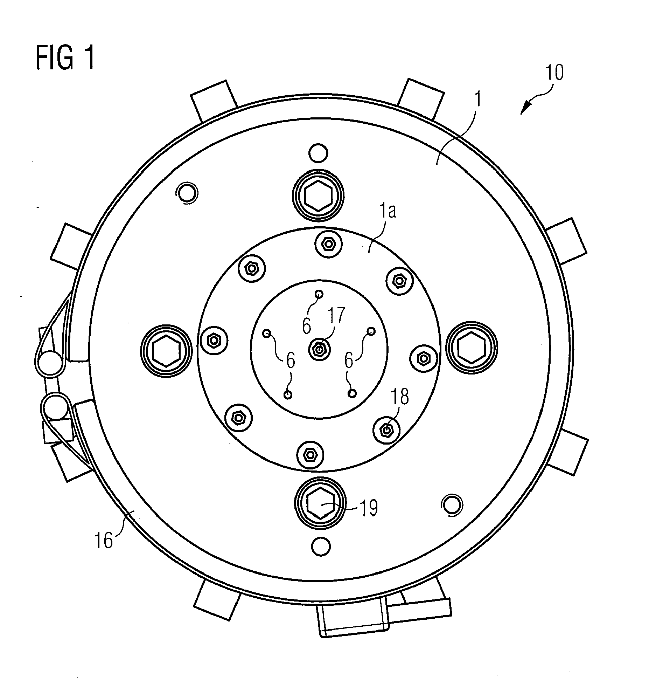

Figur 1 zeigt einen Granulierkopf 10 für einen Unterwassergranulator in Draufsicht. Die dargestellte Seite des Granulierkopfes 10 steht während des Betriebs des Unterwassergranulators in Kontakt mit Kühlwasser, welches das Kunststoffgranulat abtransportiert. Die Lochplatte wird gebildet durch eine Düsenplatte 1 und eine Schneidplatte 1 a und ist umgeben von einem Heizband 16, welches der Lochplatte Wärmeenergie zuführt, um die Lochplatte auf Temperatur zu halten.

Der Einsatz eines Heizbandes hat gegenüber Heizpatronen den Vorteil, dass es bei Wartungsarbeiten, welche ein Abnehmen der Lochplatte von dem Granulierkopf 10 erfordern, leicht zu entfernen ist.

Die Lochplatte weist fünf im Kreis angeordnete Austrittslöcher 6 auf, durch welche Kunststoffschmelze in die (nicht dargestellte) Wasserkammer austritt. Die Austrittslöcher 6 werden hier insbesondere durch die Schneidplatte 1 a gebildet, auf welcher ein Messerblock rotiert, um das Granulat zu erzeugen. Die Schneidplatte 1 a besteht aus einem Material, welches besser gegen Verschleiß durch den darüber gleitenden Messerblock geschützt ist als die Düsenplatte 1. Die Schneidplatte 1 a ist über Verbindungselemente 18, beispielsweise Schrauben, mit der Düsenplatte 1 verbunden, welche wiederum über Verbindungselemente 19, beispielsweise Schrauben, mit einem (in Figur 1 nicht dargestellten) Basisbauteil des Granulierkopfs verbunden ist. Unter den Verbindungselementen 18 sind Federn, insbesondere Tellerfedern, vorgesehen, so dass eine gewünschte Verspannkraft einstellbar ist. Die Schneidplatte 1 a weist eine mittige Befestigungseinrichtung 17 auf, welche ein Wölben der Schneidplatte 1 a in Richtung des Messerblocks verhindert.

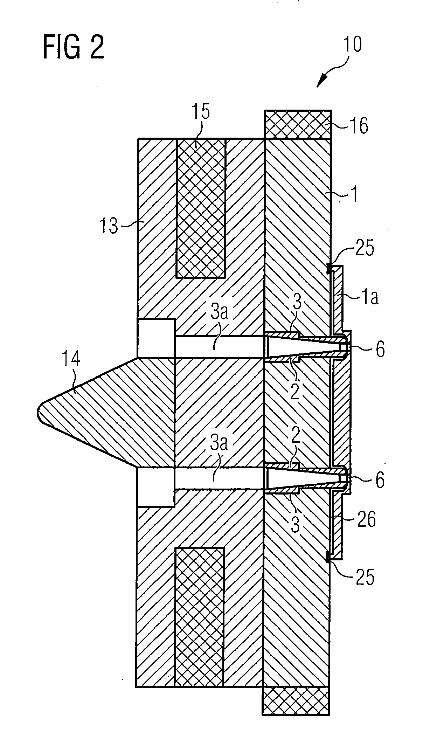

In Figur 2 ist der Granulierkopf 10 aus Figur 1 im Schnitt dargestellt. Die Kunststoffschmelze wird zunächst auf der Eintrittsseite des Granulierkopfes 10 mittels eines Kegels 14 in mehrere Teilströme aufgeteilt. Die Schmelzeströme gelangen durch Kanäle 3a in dem Basisbauteil 13 zu Durchgangsöffnungen 3 in der Lochplatte, welche durch die Düsenplatte 1 und Schneidplatte 1 a gebildet wird. Das Basisbauteil 13 wird mittels Heizpatronen 15 beheizt, so dass die Kunststoffschmelze in den Kanälen 3a nicht erstarrt. Wahlweise kann der Kegel 14 an drei Stellen torpedoartig am Basisbauteil 13 befestigt sein, so dass sich statt einzelner Kanäle 3a ein segmentierter Ringkanal bildet.

Die Lochplatte ist an dem Basisbauteil 13 angebracht und - wie bereits im Zusammenhang mit Figur 1 beschrieben - von dem Heizband 16 umgeben. Um die Lochplatte vor Verschleiß zu schützen, ist in dem Bereich der Austrittslöcher 6 die Schneidplatte 1 a angebracht. In den Durchgangsöffnungen 3, welche in diesem Ausführungsbeispiel durch die Düsenplatte 1 und die Schneidplatte 1 a führen, sind Düsen 2 angeordnet, durch welche hindurch die Kunststoffschmelze geleitet wird. Die Schneidplatte 1 a ist an der Düsenplatte 1 mittels der Verbindungselemente 18 (Fig. 1) montiert und auf Lagern 25 gelagert, so dass ein Spalt 26 zwischen der Düsenplatte 1 und der Schneidplatte 1 a verbleibt. Die Lager 25 können z.B. aus Keramik wie Zirkonoxid bestehen. Durch den Spalt 26 und die Lager 25 wird ein Wärmefluss von der Lochplatte auf das Kühlwasser, welches die Schneidplatte 1 a kontaktiert, verringert.

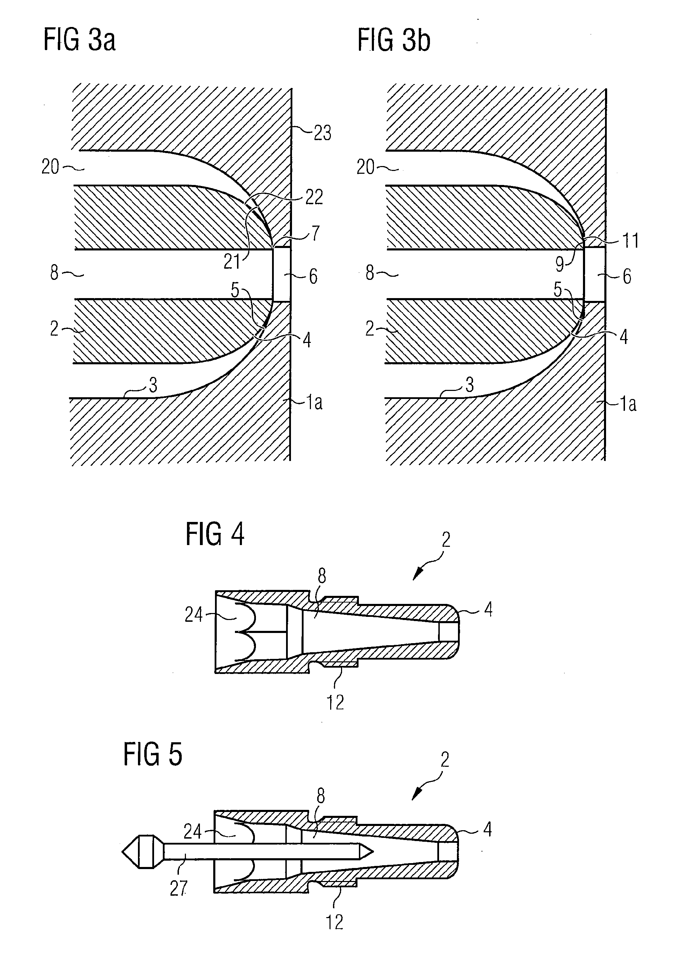

In den Figuren 3a und 3b sind Detailansichten eines Kontaktbereichs zwischen einer Stirnfläche 4 einer Düse 2 und einer Schulter 5 einer Durchgangsöffnung 3 dargestellt. Die Schulter 5 ist in der Schneidplatte 1 a gebildet und ragt in die Durchgangsöffnung 3 hinein. Aufgrund des gewählten Außendurchmessers der Düse 2, welcher sich an ihrem Austrittsende verjüngt, besteht kein Kontakt zwischen dem Außenumfang der Düse 2 und der Durchgangsöffnung 3. Der entstehende Spalt 20 sorgt für eine Wärmeisolierung, so dass auf diesem Weg keine Wärme von der Düse 2 auf die mit Kühlwasser in Kontakt stehende Schneidplatte 1 a geleitet wird.

In dem in Figur 3a dargestellten Ausführungsbeispiel ist sowohl die Stirnfläche 4 der Düse 2 als auch die Schulter 5 in der Durchgangsöffnung 3 sphärisch ausgebildet. Eine Berührung besteht lediglich in einer im Idealfall linienförmigen Kontaktfläche 7, so dass der Wärmefluss zwischen der Düse 2 und der Schneidplatte 1 a minimal ist. Insbesondere ist zu diesem Zweck der Durchtrittsdurchmesser am Ausgang der Düse 2 kleiner als der angrenzende Durchmesser der Austrittsöffnung 6 in der Schneidplatte 1 a. Ein Erstarren der Kunststoffschmelze in der Durchtrittsöffnung 8 der Düse 2 kann so verhindert werden. Darüber hinaus bewirkt das Verringern des Wärmeflusses in das Kühlwasser auch eine Energieersparnis, da weniger Heizleistung verloren geht.

Falls beispielsweise aufgrund einer Unterbrechung des Schmelzestroms doch Schmelze in der Austrittsöffnung 6 erstarrt, wird dieser Pfropfen aufgrund seiner geringen Größe von nachkommender Kunststoffschmelze einfach herausgedrückt. Die Dicke der Schulter 5 kann im Bereich der Austrittsöffnung 6 beispielsweise lediglich 1 mm betragen. Trotz des filigranen Endes der Schulter 5 ist eine hohe mechanische Stabilität gewährleistet, da der Querschnitt der Schulter 5 aufgrund der sphärischen Form sehr schnell mit zunehmendem Abstand von der Austrittsöffnung 6 ansteigt.

Aufgrund der sphärischen Ausbildung einerseits der Stirnfläche 4 der Düse 2 und andererseits der Schulter 5 und aufgrund des damit verbundenen flachen Winkels im Bereich der gemeinsamen Kontaktfläche 7 wird eine gute Dichtwirkung mit hoher Dichtkraft erzielt. Um die Dichtwirkung weiter zu verbessern, kann eine Beschichtung 21 im Bereich der Schulter 5 oder aus Herstellungsgründen auf der gesamten Oberfläche vorgesehen sein, welche aus einem weicheren Material als die Schneidplatte 1 a besteht, wie beispielsweise einem weicheren Metall oder auch einem hitzebeständigen Kunststoff. Zusätzlich kann auch die Stirnfläche 4 der Düse 2 mit einer Beschichtung 22 versehen sein. Insbesondere axiale Verschiebungen aufgrund thermischer Bewegungen können so aufgenommen werden. Eine Beschichtung mit einer Dicke von 0,1 mm kann völlig ausreichen, um thermische Verformungen, beispielsweise durch Abkühlen der Lochplatte, im Bereich von z.B. 0,01 mm aufzunehmen. Zusätzlich kann eine Verschleißschutzschicht 23 auf der Schneidplatte 1 a vorgesehen sein, um die Schneidplatte 1 a vor dem auf ihr gleitenden Messerblock zu schützen.

Figur 3b zeigt ein Ausführungsbeispiel, bei dem die sphärische Stirnfläche 4 der Düse 2 und die sphärische Schulter 5 der Schneidplatte 1 a jeweils einen ebenen Bereich 9 bzw. 11 aufweisen. Durch Vorsehen eines ebenen Bereichs parallel zu einer radialen Ebene wird ein Gleiten der Düse 2 auf der Schulter 5 ermöglicht, so dass radiale Verschiebungen besser aufgenommen werden können. Der ebene Bereich 9, 11 kann beispielsweise 0,2 - 0,3 mm breit sein, wobei dieser sowohl auf der Stirnfläche 4 der Düse 2 als auch auf der Schulter 5 an die Durchtrittsöffnung 8 und die Austrittsöffnung 6 angrenzt. Ansonsten entspricht das in Figur 3b dargestellte Ausführungsbeispiel dem in Figur 3a.

Figur 4 zeigt schließlich eine Düse 2, welche ein Gewinde 12 aufweist. Mittels des Gewindes 12 kann die Düse 2 in die Düsenplatte eingeschraubt werden und so mit ihrer Stirnfläche 4 gegen die Schulter 5 in der jeweiligen Durchgangsöffnung 3 der Düsenplatte gedrückt werden. Die Düse 2 kann zum Einschrauben beispielsweise einen Innensechskant 24 aufweisen. Auf diese Weise kann jede Düse 2 einzeln justiert werden, beispielsweise bei Wartungsarbeiten oder auch beim Aufbau einer Granulieranlage, so dass geringe Toleranzen insbesondere in den axialen Abmessungen der Düsen 2 überwunden und der gewünschte Anpressdruck auf die Stirnfläche 4 aufgebracht werden können.

Figur 5 zeigt eine besondere Ausgestaltung der Düse 2 aus Figur 4. In die Durchtrittsöffnung 8 der Düse 2 erstreckt sich ein Wärmeleitstift 27, der die Schmelze in der Düse 2 bis kurz vor ihrem Austritt aufheizt.

## Patentansprüche

1. Lochplatte für einen Granulierkopf (10) eines Unterwassergranulators zum Granulieren von Kunststoffen, welche Durchgangsöffnungen (3) zum Durchtritt von Kunststoffschmelze und in die Durchgangsöffnungen (3) eingesetzte Düsen (2) aufweist, wobei die Durchgangsöffnungen (3) jeweils an ihrem austrittsseitigen Ende eine in die Durchgangsöffnung (3) hineinragende Schulter (5) aufweisen und die Düsen (2) sich an ihrem austrittsseitigen Ende im Außenquerschnitt unter Ausbildung einer Stirnfläche (4) verjüngen, **dadurch gekennzeichnet, dass** die Düsen (2) mit ihren Stirnflächen (4) an den Schultern (5) der Durchgangsöffnungen (3) anliegen, wobei die Stirnflächen (4) der Düsen (2) vorzugsweise schräg, insbesondere vorzugsweise konvex und besonders bevorzugt im Wesentlichen sphärisch, ausgebildet sind, wobei gegebenenfalls ein axial vorderster Bereich (9) der Stirnflächen (4) eben ausgebildet ist.

2. Lochplatte nach Anspruch 1, wobei die Düsen (2) in der Lochplatte (1, 1 a) derart gelagert sind, dass sie bezüglich der Lochplatte (1, 1 a) axial justierbar sind.

3. Lochplatte nach Anspruch 2, wobei die Düsen in die Lochplatte eingeschraubt sind.

4. Lochplatte nach einem der Ansprüche 1 bis 3, wobei sowohl die Stirnflächen (4) der Düsen (2) als auch die Schultern (5) der Durchgangsöffnungen (3) jeweils im Wesentlichen sphärisch ausgebildet sind, wobei die Krümmungsradien der Stirnflächen (4) und der Schultern (5) unterschiedlich sind.

5. Lochplatte nach einem der Ansprüche 1 bis 4, wobei die Schultern (5) der Durchgangsöffnungen (3) einen zentralen Flächenanteil (11) parallel zu einer radialen Ebene aufweisen.

6. Lochplatte nach einem der Ansprüche 1 bis 5, wobei die Lochplatte (1, 1 a) zumindest auf den Schultern (5) der Durchgangsöffnungen (3) eine Beschichtung (21) aus einem weicheren Material als dem der Lochplatte (1, 1 a) aufweist.

7. Lochplatte nach einem der Ansprüche 1 bis 6, wobei die Lochplatte (1, 1 a) eine Düsenplatte (1) zur Aufnahme der Düsen (2) und eine austrittsseitig vor die Düsenplatte (1) montierte Schneidplatte (1 a), in der die Schultern (5) ausgebildet sind, aufweist.

8. Lochplatte nach Anspruch 7, wobei die Schneidplatte (1a) eingerichtet ist, zentral (17) in Richtung der Düsenplatte (1) verspannt zu werden.

9. Lochplatte nach Anspruch 7 oder 8, wobei die Schneidplatte (1a) eintrittsseitig konvex ausgebildet ist.

10. Lochplatte nach einem der Ansprüche 1 bis 9, wobei die Düsen (2) axial federnd gegen die Schultern (5) gelagert sind.

11. Düse für einen Granulierkopf (10) eines Unterwassergranulators zum Durchtritt von Kunststoffschmelze, **dadurch gekennzeichnet, dass** ihre austrittsseitige Stirnfläche (4) konvex, vorzugsweise im Wesentlichen sphärisch, ausgebildet ist, wobei gegebenenfalls ein axial vorderster Bereich (9) der Stirnflächen (4) eben ausgebildet ist.

12. Düse für einen Granulierkopf (10) eines Unterwassergranulators zum Durchtritt von Kunststoffschmelze, vorzugsweise gemäß Anspruch 11, **dadurch gekennzeichnet, dass** die Düse (2) eingerichtet ist, bezüglich einer Lochplatte (1, 1 a) eines Granulierkopfes (10) eines Unterwassergranulators axial justiert zu werden.

13. Düse nach Anspruch 12, wobei die Düse (2) zur axialen Justierbarkeit ein Gewinde (12) aufweist.

14. Unterwassergranulator zum Granulieren von Kunststoffen, umfassend eine Lochplatte (1, 1 a) nach einem der Ansprüche 1 bis 10 und/oder Düsen (2) nach einem der Ansprüche 11 bis 13.
